# EUROPÄISCHE PATENTSCHRIFT

(11) **EP 2 893 101 B1**
(45) Veröffentlichungstag und Bekanntmachung des Hinweises auf die Patenterteilung: **07.04.2021**
(21) Anmeldenummer: 13759158.2
(22) Anmeldetag: 30.08.2013
(51) Int. Cl.: E04C 2/36, B32B 5/18, B32B 5/22, B32B 5/30, B32B 17/06, B32B 21/00, B32B 21/06, B32B 21/13, B32B 3/02, B32B 3/08, B32B 3/12, B32B 3/18, B32B 3/22

(54) **MEHRLAGIGE BRETTPLATTE**
MULTI-LAYERED TIMBER PANEL
PANNEAU DE LAMES DE BOIS MULTICOUCHE

(30) Priorität: 07.09.2012 DE 102012108313
(43) Veröffentlichungstag der Anmeldung: 15.07.2015
(73) Patentinhaber: ZÜBLIN Timber Aichach GmbH, 86551 Aichach (DE)
(72) Erfinder: MOSER, Karl, 86551 Aichach (DE)
(74) Vertreter: Charrier Rapp & Liebau
(86) Internationale Anmeldenummer: PCT/EP2013/067990
(87) Internationale Veröffentlichungsnummer: WO 2014/037286

(56) Entgegenhaltungen:
- EP-A2- 0 387 902
- WO-A1-01/49483
- DE-A1- 2 505 232
- DE-A1- 10 030 721
- DE-A1-102009 005 316
- US-A- 5 184 439

## Beschreibung

Die Erfindung betrifft eine mehrlagige Brettplatte nach dem Oberbegriff des Anspruchs 1 sowie ein Verfahren zur Herstellung einer solchen Brettplatte nach dem Oberbegriff des Anspruchs 12.

Aus dem Stand der Technik sind Brettsperrholzplatten bekannt, die aus kreuzweise gelegten und ggf. verpressten und verleimten Holzbrettern bestehen. Solche Brettsperrholzplatten können als vorgefertigte Bauelemente im Holzbau verwendet werden. Aus der WO2008/025312 A1 ist beispielsweise eine solche Brettsperrholzplatte aus wenigstens drei miteinander verbundenen Lagen bekannt, wobei die einzelnen Lagen aus Massivholzbrettern hergestellt sind.

Die WO 01/49483 A1 zeigt ein Leichtbauelement aus Furnierholz- und Polymerschichten. Aus der DE 2505232-A ist ein Verfahren zur Herstellung von Schalentafeln mit tragender Haut und nach dem Verfahren hergestellte Tafeln zur Verwendung bei Außen- und Innenwänden, Fußböden oder Decken von Gebäuen bekannt, wobei die Tafeln aus zwei Hauptplatten bestehen, die durch Abstandselemente auf Abstand gehalten sind und einander überdecken. Die DE 100 30 721 A1 zeigt eine Kantel mit mindestens zwei Decklagen aus Massivholz und einer dazwischen angeordneten Mittellage, wobei in der Mittellage zwei stabilisierende Kernelemente aus einem Holzwerkstoff im Abstand zueinander angeordnet sind, so dass ein Hohlraum zwischen den Kernelementen ausgebildet ist, der ein dämmendes oder isolierendes Material aufnehmen kann. Der Hohlraum kann bspw. ein Mittelelement aus einem niederwertigeren Holz aufnehmen.

Brettsperrholzplatten und Verfahren zu deren Herstellung sind beispielsweise aus der DE 10 2010 026 578-B und der DE 10 2011 102 795-A bekannt. Die bekannten Brettsperrholzplatten bestehen üblicherweise aus einer ungeraden Anzahl von Lagen aus Brettern, die kreuzweise gelegt sind. Bei einem dreilagigen Aufbau besteht eine Brettsperrholzplatte beispielsweise aus einer ersten Decklage mit Brettern, die ohne Abstand zueinander und nebeneinander verlegt sind, eine entsprechend ausgebildete zweite Decklage und eine dazwischen angeordnete Mittellage, wobei die Bretter der Mittellage in Bezug auf die Bretter der beiden Decklagen in Querlage angeordnet sind. Zweckmäßig sind die Bretter der beiden Decklagen bezüglich der Bretter der dazwischen angeordneten Mittellage in einem Winkel von 90° zueinander angeordnet. Bei einem Aufbau einer solchen Brettsperrholzplatte mit mehr als drei Lagen sind zwischen den beiden Decklagen weitere Mittellagen angeordnet, wobei die Bretter von benachbarten Mittellagen in Querlage (zweckmäßig in 90°-Lage) oder in Kreuzlage zueinander angeordnet sind. Die Bretter von benachbarten Lagen sind dabei jeweils miteinander verbunden, beispielsweise durch eine Verklebung oder durch Befestigungsmittel wie Nägel oder Schrauben.

Um eine ausreichende Festigkeit der Brettsperrholzplatten zu gewährleisten und um aus Brandschutzgründen den Durchtritt von Luftströmungen durch die einzelnen Lagen der Brettsperrholzplatte zu verhindern, sind die Bretter der einzelnen Lagen solcher Brettsperrholzplatten ohne Lücken dicht nebeneinander angeordnet. Zur Vermeidung von Zwischenräumen zwischen den nebeneinander liegenden Brettern der einzelnen Lagen einer solchen Brettsperrholzplatte müssen die Bretter, aus denen die Lagen gefertigt werden, aufwendig und mit hoher Präzision besäumt werden. Die Bretter, aus denen die einzelnen Lagen der bekannten Brettsperrholzplatten gefertigt werden, sind in der Regel Vollholzbretter. Daraus resultiert ein erhebliches Gesamtgewicht der aus solchen Vollhölzern hergestellten Brettsperrholzplatten. Ein hohes Gewicht der Brettsperrholzplatten ist jedoch beispielsweise in der Verwendung als Bauholz wegen der erschwerten Handhabung auf der Baustelle und erhöhter Transportkosten nachteilig.

Hiervon ausgehend liegt der Erfindung die Aufgabe zugrunde, eine mehrlagige Brettplatte in Leichtbauweise bereitzustellen, welche hinsichtlich der Festigkeit und anderer baurelevanter Eigenschaften, wie z.B. Luftdichtigkeit, Schallabsorption, Brandhemmung, etc. mit herkömmlichen Brettsperrholzplatten vergleichbar ist.

Gelöst wird diese Aufgabe mit einer mehrlagigen Brettplatte mit den Merkmalen des Anspruchs 1. Bevorzugte Ausführungsformen dieser Brettplatte sind in den abhängigen Ansprüchen 2 - 11 angegeben. Zur Lösung der Aufgabe trägt ferner ein Verfahren zur Herstellung einer mehrlagigen Brettplatte mit den Merkmalen des Anspruchs 12 bei. In den abhängigen Ansprüchen 31 - 15 sind bevorzugte Ausführungsformen des Herstellungsverfahrens aufgezeigt.

Die erfindungsgemäße Brettplatte weist eine erste Decklage, eine zweite Decklage und mindestens eine dazwischen angeordnete Mittellage auf, wobei die beiden Decklagen jeweils aus Brettlagen mit einer Mehrzahl von nebeneinander angeordneten Brettern gebildet sind und wenigstens eine oder jede Mittellage materialfreie Zwischenräume aufweist. Unter materialfreien Zwischenräumen wird hierbei verstanden, dass in der wenigstens einen Mittellage Hohlräume in dem Material, aus dem die jeweilige Mittellage gebildet ist, ausgebildet werden, welche frei vom Material der jeweiligen Mittellage sind. Diese materialfreien Zwischenräume bzw. Hohlräume können mit einem Füllmaterial, bevorzugt mit einem Füllmaterial geringer Dichte, ausgefüllt sein. Durch die Ausbildung der materialfreien Zwischenräume in der oder jeder Mittellage wird die Dichte der mehrlagigen Brettplatte im Vergleich zu einer Brettplatte, welche ausschließlich aus abstandsfrei nebeneinander angeordneten Vollhölzern gebildet ist, wesentlich reduziert, wodurch sich das Gesamtgewicht der mehrlagigen Brettplatte im Vergleich zu den herkömmlichen Brettsperrholzplatten verringert. Dies kann bei zweckmäßiger Ausgestaltung der Mittellagen ohne Einschränkungen in Bezug auf die Festigkeit der Brettplatte erfolgen.

Gemäß der Erfindung sind die Holzbretter wenigstens einer Mittellage aus Holzschwarten gebildet, welche zur Bildung der jeweiligen Mittellage so nebeneinander angeordnet sind, dass sich aufgrund des ungleichmäßigen seitlichen Randbereichs der Holzschwarten Zwischenräume zwischen benachbarten Holzschwarten einer Mittellage ergeben.

Dabei können die Platten jeder Mittellage aus Holzschwarten gebildet sein, welche zur Ausbildung der jeweiligen Mittellage so nebeneinander angeordnet sind, dass sich aufgrund des ungleichmäßigen seitlichen Randbereichs der Holzschwarten Zwischenräume zwischen benachbarten Holzschwarten einer Mittellage ergeben.

Die Decklagen der erfindungsgemäßen Brettplatte, also die erste Decklage und die zweite Decklage, werden bevorzugt aus parallel besäumten Brettern gebildet, welche ohne Abstand nebeneinander angeordnet werden, um eine zwischenraumfreie Decklage zu bilden. Dies hat den Vorteil, dass die Außenflächen der mehrlagigen Brettplatte eben und homogen und insbesondere dicht gegen den Durchtritt von Luft oder Feuchtigkeit sind. Zur zusätzlichen Abdichtung der Außenflächen der Brettplatte gegen Luft- oder Feuchtigkeitseintritt und/oder zur Verbesserungung der Brandhemmung können diese mit einer Beschichtung oder einer Lackierung versehen oder mit einer Folie kaschiert werden.

Es ist besonders bevorzugt, wenn die Bretter von benachbarten Brettlagen so zueinander angeordnet sind, dass die Faserrichtungen der Bretter von benachbarten Brettlagen winklig zueinander und insbesondere unter einem rechten Winkel verlaufen. Es ist jedoch auch möglich, die Bretter von benachbarten Brettlagen so zueinander anzuordnen, dass ihre Faserrichtungen schrägwinklig zueinander verlaufen, insbesondere unter einem Winkel im Bereich von 8° bis 45°.

Sowohl die Bretter der beiden Decklagen als auch die Bretter der oder jeder Mittellage können dabei entweder aus Vollhölzern gebildet sein oder aus Holzbrettern, die mittels einer Keilzinkenverbindung an ihren stirnseitigen Enden miteinander verbunden sind, um ein längeres Holzbrett zu bilden. Auch die für die Ausbildung der Mittellagen verwendeten Holzschwarten können an ihren stirnseitigen Enden durch Keilzinkenverbindungen verlängert werden, wobei es im Bereich des Verbindungsstoßes ggf. zu Breitensprüngen kommen kann. Dadurch kommt es zu einer Variation der Breite des materialfreien Zwischenraums zwischen benachbarten Holzschwarten einer Mittellage.

In der Regel weisen Holzschwarten, also die äußeren Abschnitte eines Holzstamms, die beim Zersägen des Stammes auf Schnittholz entstehen, in ihrem seitlichen Bereich Stammrundungen auf, die von der Stammaußenseite des Holzstammes stammen, aus dem die Schwarten geschnitten worden sind. Häufig weisen solche Holzschwarten in ihrer Längsrichtung einen konischen und teilweise auch unregelmäßigen Verlauf auf. Durch diesen konischen und ggf. unregelmäßigen Verlauf der Seitenbereiche der Holzschwarten bilden sich beim Nebeneinanderlegen solcher Holzschwarten automatisch materialfreie Zwischenräume bzw. Hohlräume aus. Holzschwarten eignen sich deshalb in besonderer Weise zur Herstellung der Mittellagen der erfindungsgemäßen Brettplatte. Solche Holzschwarten sind auch deshalb für die Herstellung der Mittellagen der erfindungsgemäßen Brettplatte besonders geeignet, weil sie im Vergleich zu besäumten Vollhölzern wesentlich günstiger sind, da sie in der Regel wegen ihres ungleichmäßigen Verlaufs an den Seitenrändern für eine Verwendung als Bauholz eine schlechte Qualität aufweisen und deshalb als Restholz betrachtet werden.

In allen Ausführungsbeispielen der erfindungsgemäßen Brettplatte hat es sich als zweckmäßig erwiesen, wenn der Raumanteil der Zwischenräume (Hohlräume) einer Mittellage am Gesamtvolumen der jeweiligen Mittellage zwischen 40 % und 80 % beträgt und bevorzugt bei ca. 50 % liegt.

Zur Herstellung der mehrlagigen Brettplatte gemäß der Erfindung wird in dem erfindungsgemäßen Herstellungsverfahren zunächst eine erste Decklage durch Nebeneinanderlegen von mehreren Brettern gebildet, wobei die Bretter der Decklage bevorzugt ohne Abstand nebeneinander angeordnet und ggf. seitlich miteinander verbunden werden, beispielsweise durch Verkleben. Danach wird eine oder mehrere Mittellagen durch Nebeneinanderlegen von mehreren Platten oder Brettern auf die Bretter der ersten Decklage gefertigt, wobei die Platten oder Bretter der Mittellagen so nebeneinander angeordnet werden, dass sich materialfreie Zwischenräume zwischen benachbarten Platten oder Bretter ergeben. Zweckmäßig werden die Bretter einer ersten Mittellage auf die erste Decklage aufgelegt und mit den Brettern der Decklage verbunden. Bevorzugt werden die Platten oder Bretter der (ersten) Mittellage gekreuzt (d.h. unter einem Winkel, der bevorzugt 90° beträgt, aber auch kleiner als 90° sein kann) auf die Bretter der ersten Decklage aufgelegt. Auf die erste Mittellage können ggf. weitere Mittellagen aufgelegt und mit der darunter befindlichen Mittellage verbunden werden, wobei bevorzugt die Platten oder Bretter der weiteren Mittellagen gekreuzt zu den Platten oder Brettern der darunterliegenden Mittellage verlegt werden. Schließlich wird auf die oberste Mittellage eine zweite Decklage (obere Decklage) durch Nebeneinanderlegen von mehreren Brettern aufgelegt, wobei die Bretter der zweiten Decklage bevorzugt ohne Abstand zueinander und gekreuzt auf die Platten oder Bretter der obersten Mittellage aufgelegt und mit den Platten bzw. Brettern der obersten Mittellage verbunden werden. Bei den Holzbrettern der Mittellagen handelt es sich erfindungsgemäß um Holzschwarten, welche so nebeneinander angeordnet werden, dass sich aufgrund des ungleichmäßigen seitlichen Randbereichs der Holzschwarten Zwischenräume zwischen benachbarten Holzschwarten ergeben.

In einer bevorzugten Ausführungsform dieses Herstellungsverfahrens können die Zwischenräume (Hohlräume) in den Mittellagen anschließend mit einem Füllmaterial, insbesondere mit einem Füllmaterial, welches eine geringere Dichte als Holz aufweist, ausgefüllt werden. Hierfür wird in die Zwischenräume der oder jeder Mittellage ein flüssiges oder zähflüssiges und bevorzugt aushärtbares Füllmaterial injiziert. Zum Injizieren eines Füllmaterials in die Zwischenräume (Hohlräume) der Mittellagen können Injektionsbohrungen in die Bretter bzw. Platten der Decklagen und/oder der Mittellagen eingebracht werden, durch welche das Füllmaterial mittels einer Injektionsnadel oder - kartusche in die Zwischenräume der Mittellagen eingepresst werden kann. Durch das Ausfüllen der Zwischenräume (Hohlräume) der Mittellagen mit einem Füllmaterial, kann sowohl die Festigkeit als auch die Dichtigkeit der erfindungsgemäßen Brettplatten erhöht werden.

Diese und weitere Vorteile der erfindungsgemäßen Brettplatte und des erfindungsgemäßen Verfahrens zur Herstellung solcher Brettplatten ergeben sich aus den nachfolgend unter Bezugnahme auf die begleitenden Zeichnungen näher beschriebenen Ausführungsbeispielen. Die Zeichnungen zeigen:

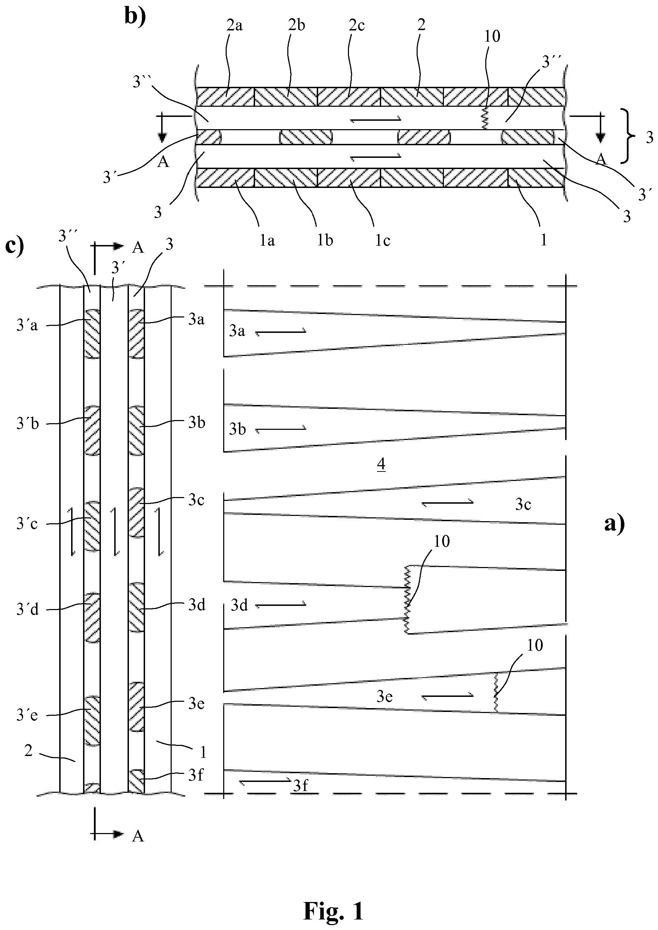

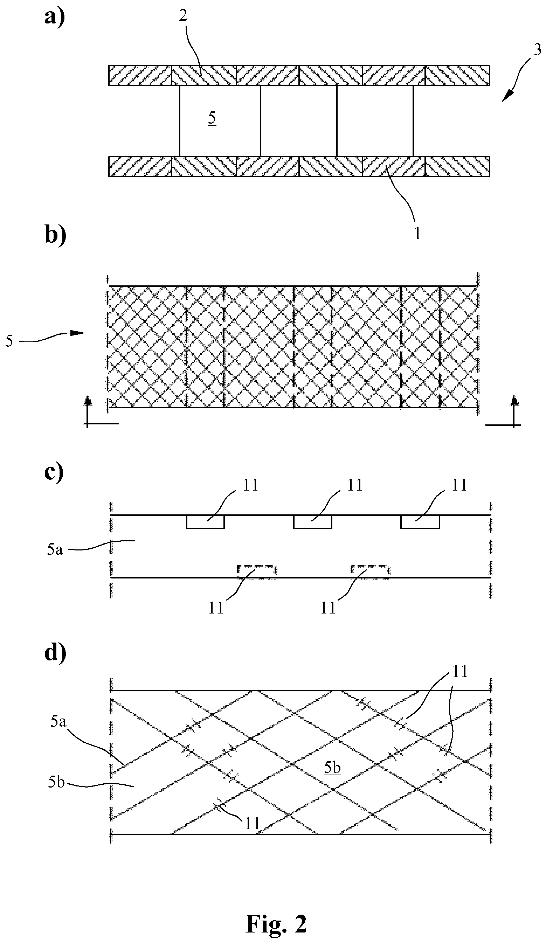

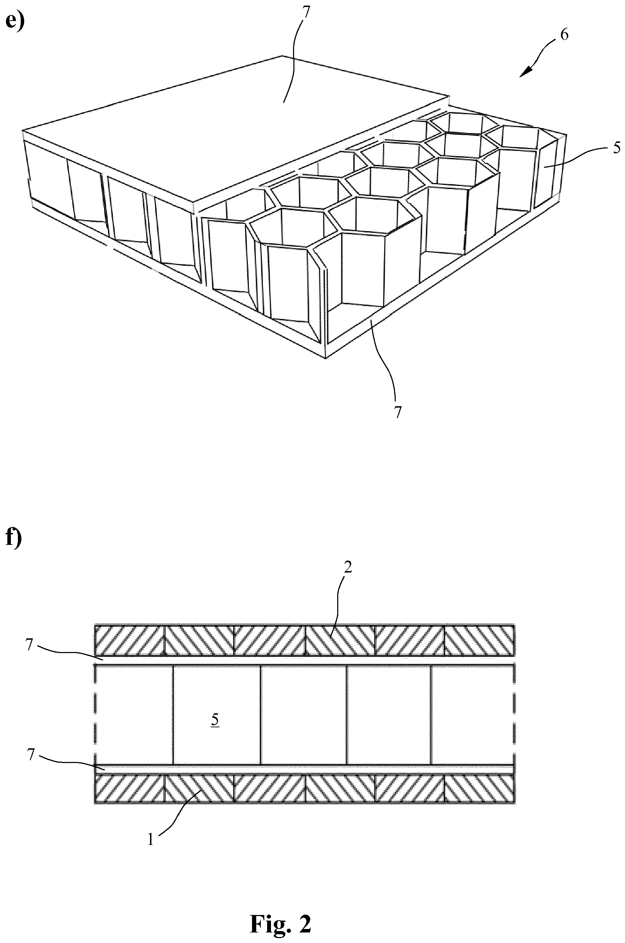

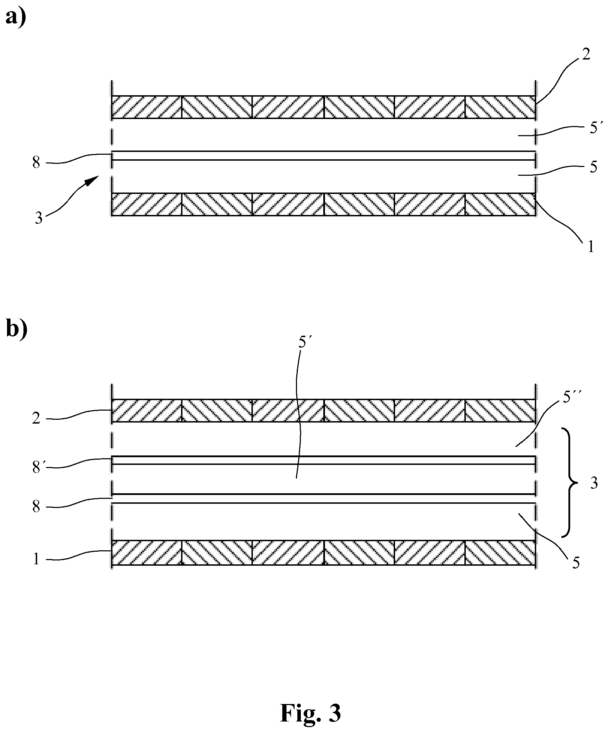

**Fig. 1****:** Schematische Darstellung einer mehrlagigen Brettplatte gemäß der Erfindung in einer ersten Ausführungsform in einer Draufsicht (Figur 1a), einem Längsschnitt (Figur 1b) und einem Querschnitt (Figur 1c);

In Figur 1 ist eine mehrlagige Brettplatte gemäß der Erfindung schematisch dargestellt, wobei Figur 1a eine Draufsicht auf eine Mittellage und die Figuren 1b und 1c einen Längs- und einen Querschnitt durch die Brettplatte zeigen. Die mehrlagige Brettplatte setzt sich aus einer ersten Decklage 1 (untere Decklage), einer zweiten Decklage 2 (obere Decklage) sowie drei zwischen den beiden Decklagen 1, 2 angeordneten Mittellagen 3, 3', 3" zusammen. Bei dem gezeigten Ausführungsbeispiel handelt es sich lediglich um ein exemplarisches Beispiel einer mehrlagigen Brettplatte gemäß der Erfindung. Die Anzahl der Mittellagen 3 ist dabei variabel und kann an die Erfordernisse des jeweiligen Verwendungszwecks der Brettplatte, beispielsweise als Bauplatte für die Herstellung von Wänden oder Decken von Gebäuden und in Bezug auf ihre Festigkeit, Steifigkeit und ihr Gewicht, angepasst werden.

Die Decklagen 1 und 2 der in Figur 1 gezeigten Brettplatte sind jeweils durch mehrere, abstandsfrei nebeneinander angeordnete Bretter a, b, c gebildet. Bei den Brettern handelt es sich beispielweise um parallel besäumte Vollholz-Bretter, die ohne Abstand nebeneinander angeordnet und seitlich miteinander verbunden sind, beispielsweise durch Verkleben bzw. Verleimen oder durch andere Verbindungsmittel. Die Bretter 1a, 1b, 1c der ersten Decklage 1 sowie die Bretter 2a, 2b, 2c der zweiten Decklage 2 sind dabei jeweils in Längsrichtung zur Ausbildung einer Längsbrettlage nebeneinander angeordnet.

Auf der ersten Decklage 1 (unterste Decklage) ist eine erste Mittellage 3 als Querbrettlage aufgelegt. Auf der ersten Mittellage 3 ist eine zweite Mittellage 3' aufgelegt, wobei diese zweite Mittellage ebenso wie die beiden Decklagen 1, 2 als Längsbrettlage ausgebildet ist, d.h. die Bretter 3a, 3b, 3c der zweiten Mittellage 3' verlaufen parallel zu den Brettern 1a, 1b, 1c bzw. 2a, 2b, 2c der beiden Decklagen 1 und 2. Auf die zweite Mittellage 3' folgt eine dritte Mittellage 3", welche wiederum als Querbrettlage ausgebildet ist, d.h. die Bretter 3a, 3b, 3c der dritten Mittellage 3" verlaufen quer oder schräg zu den Brettern 1a, 1b, 1c bzw. 2a, 2b, 2c der beiden Decklagen 1 und 2.

In dem hier gezeigten Ausführungsbeispiel ist jede Mittellage 3 aus Holzschwarten 3a, 3b, 3c, ... gebildet, welche so nebeneinander in der jeweiligen Mittellage 3 bzw. 3' bzw. 3" angeordnet sind, dass seitlich zwischen benachbarten Holzschwarten 3a, 3b bzw. 3b, 3c, usw. materialfreie Zwischenräume 4 (Hohlräume) entstehen. Diese materialfreien Zwischenräume 4 entstehen beim Nebeneinanderlegen von Holzschwarten 3a, 3b, 3c automatisch aufgrund der unregelmäßigen Ausbildung der Holschwarten in ihrem seitlichen Randbereich.

Die Holzschwarten 3a, 3b, 3c der einzelnen Mittellagen 3, 3', 3" können dabei auch aus einzelnen Holzschwartenstücken zusammengesetzt sein, welche an ihren stirnseitigen Enden mittels einer Keilzinkenverbindung miteinander verbunden sind. Im Bereich des Verbindungsstoßes 10 einer solchen Keilzinkenverbindung kann es zu einem Breitensprung der so zusammengesetzten Abschnitte einer Holzschwarte kommen (Figur 1a). Ein solcher Breitensprung ist in dem in Figur 1a gezeigten Ausführungsbeispiel bei der Holzschwarte 3d zu erkennen. Die Holzschwarte 3e ist ebenfalls aus zwei Holzschwartenabschnitten mit einer Keilzinkenverbindung zusammengesetzt, wobei hier kein Breitensprung entsteht.

In den erfindungsgemäßen Brettplatten, in denen die beiden Decklagen 1 und 2 aus Holzbrettern und die Mittellagen 3 aus Holzschwarten gebildet sind, werden die Bretter a, b, c benachbarter Brettlagen (also beispielsweise der ersten Decklage und der untersten Mittellage 3 oder der ersten Mittellage 3 und der darüber liegenden zweiten Mittellage 3' oder der obersten Mittellage 3" und der darüber liegenden oberen Decklage 2) so zueinander angeordnet, dass die Faserrichtungen der Bretter benachbarter Brettlagen winklig und insbesondere rechtwinklig zueinander verlaufen.

Die Bretter a, b, c von benachbarten Lagen sind zweckmäßig miteinander verbunden, beispielsweise durch Verkleben oder durch andere Befestigungsmittel wie beispielsweise Nägel oder Schrauben.

Zur Herstellung der in Figur 1 gezeigten Brettplatte wird zunächst die erste Decklage 1 (unterste Decklage) gefertigt, indem mehrere parallel besäumte Bretter aus Vollholz ohne Abstand nebeneinander angelegt und seitlich miteinander verbunden werden. Zur Verbindung von nebeneinander angelegten Brettern 1a, 1b, 1c der ersten Decklage 1 können die Seitenränder der Bretter 1a, 1b, 1c beispielsweise miteinander verklebt oder verleimt werden.

Auf die so gefertigte erste Decklage 1 wird dann die erste Mittellage 3 aufgelegt, indem Holzschwarten 3a, 3b, 3c oder Platten oder parallel besäumte Holzbretter auf die Bretter 1a, 1b, 1c der ersten Decklage 1 gekreuzt und so aufgelegt werden, dass sich zwischen benachbarten Holzschwarten 3a, 3b bzw. 3b, 3c, etc. oder zwischen benachbarten Platten oder Bretter der Mittellage 3 materialfreie Zwischenräume 4 ergeben. Bei der Verwendung von Holzschwarten 3a, 3b, 3c ergeben sich diese materialfreien Zwischenräume zwischen nebeneinander liegenden Holzschwarten aufgrund des unregelmäßigen Verlaufs der Holzschwarten in ihrem Randbereich automatisch. Die Holzschwarten 3a, 3b, 3c der Mittellage 3 werden mit den darunterliegenden Brettern 1a, 1b, 1c der ersten Decklage 1 verbunden, beispielsweise durch Kleben oder Verleimen oder mittels anderer Verbindungsmittel wie Nägel oder Schrauben.

Auf die unterste Mittellage 3 können dann die weiteren Mittellagen 3' und 3" (und ggf. noch weitere Mittellagen) aufgelegt werden, wobei die Holzschwarten 3a, 3b, 3c von benachbarten Mittellagen 3, 3' bzw. 3', 3" gekreuzt zueinander verlaufen.

Auf die oberste Mittellage 3" wird schließlich die zweite Decklage 2 (obere Decklage) aufgelegt, indem mehrere Bretter 2a, 2b, 2c ohne Abstand zueinander und nebeneinander sowie in Bezug auf die Bretter oder Platten der obersten Mittellage 3" gekreuzt angeordnet und mit den Holzschwarten 3a, 3b, 3c der darunter liegenden Mittellage 3" verbunden werden.

Die Zwischenräume 4 (Hohlräume) der Mittellagen 3, 3', 3" können anschließend durch Injektion eines Füllmaterials ausgefüllt werden. Als besonders geeignetes Füllmaterial hat sich dabei ein geschäumtes Material, insbesondere geschäumte Kunststoffe wie Polyurethanschaum oder Polyethylenschaum erwiesen. Als Füllmaterialien können jedoch auch rieselfähige Materialien, wie Glasschaumschotter, verwendet werden. Auch Glasschaum oder wasserglasbasiertes Material kann als Füllmaterial verwendet werden. Besonders geeignet sind aushärtbare Füllmaterialien, die zunächst flüssig oder zähflüssig sind und nach der Injektion in die Zwischenräume 4 aushärten. Zur Injektion des Füllmaterials in die materialfreien Zwischenräume 4 der Mittellagen 3 wird deshalb zweckmäßig ein flüssiges oder zähflüssiges Füllmaterial verwendet, welches ggf. noch aufgeschäumt wird oder welches eine Härterkomponente enthält, das zur Aushärtung des Füllmaterials in den Zwischenräumen 4 nach dessen Injektion führt.

Um das Füllmaterial in die Zwischenräume 4 der Mittellagen 3 injizieren zu können, werden in die Decklagen 1, 2 und ggf. auch in die Mittellagen 3, 3', 3" Injektionsbohrungen eingebohrt, durch welche das Füllmaterial mittels einer Injektionsnadel oder einer Injektionskartusche eingepresst werden kann. Das flüssige oder zähflüssige Füllmaterial fließt aufgrund des Injektionsdrucks, der mit der Injektionsnadel oder der Injektionskartusche aufgebracht wird, durch die Injektionsbohrungen in die Zwischenräume 4 und verteilt sich dort weitgehend gleichmäßig.

Durch das Einpressen des Füllmaterials in die Zwischenräume 4 der Mittellagen 3 wird die Festigkeit und die statische Belastbarkeit der mehrlagigen Brettplatte erhöht. Je nach vorgesehenem Verwendungszweck der erfindungsgemäßen Brettplatte können die erforderlichen statischen Belastungen besonders in Vorzugsrichtungen auftreten. Dem kann bei der Herstellung der erfindungsgemäßen Brettplatten dadurch Rechnung getragen werden, dass nur die Zwischenräume 4 in bestimmten Mittellagen 3 mit Füllmaterial ausgefüllt werden, wohingegen die Zwischenräume 4 anderer (insbesondere benachbarter) Mittellagen 3', 3", nicht mit einem Füllmaterial ausgefüllt werden.

Die Injektion des Füllmaterials in die Zwischenräume 4 der Mittellagen 3 kann dabei entweder von oben bzw. von unten durch die Decklagen 1, 2 erfolgen oder von der Seite her direkt in die Mittellagen 3, 3', 3".

Als besonders zweckmäßig hat sich für die Ausfüllung der Zwischenräume 4 der Mittellagen 3 ein kombiniertes Bohr- und Injektionsverfahren erwiesen, in dem in einem Arbeitsgang und mit einem Werkzeug sowohl die Bohrung einer Injektionsbohrung als auch das Einpressen des Füllmaterials durch diese Injektionsbohrung in die Zwischenräume 4 erfolgen kann. Nach der Injektion des Füllmaterials in die Zwischenräume 4 kann die so fertig gestellte Brettplatte mit einem Ultraschall- oder Durchleuchtungsverfahren inspiziert werden, um beispielsweise den Verfüllgrad der Zwischenräume 4 mit Füllmaterial zu kontrollieren. Gegebenenfalls werden die Füllmaterialien hierfür mit geeigneten Kontraststoffen vermischt, welche beispielsweise in einem Durchleuchtungsverfahren erfasst werden können.

In allen Ausführungsbeispielen der erfindungsgemäßen Brettplatte können die verwendeten Materialen, also beispielsweise die Bretter mit brandhemmenden Materialien beschichtet oder getränkt werden. So können beispielsweise Silikat enthaltende Folien oder Anstriche auf die Bretter oder Platten aufgebracht werden. Diese silikathaltigen Folien oder Anstriche schäumen bei einer Brand- oder Hitzebelastung auf und behindern dadurch das Eindringen von heißen, entzündlich wirkenden Brandgasen in eine Holzkonstruktion, welche aus erfindungsgemäßen Brettplatten gefertigt ist. Diese silikathaltigen Folien oder Anstriche bewirken andererseits bei einem Brand einen kühlenden Wärmeschutzschirm, der die Entzündung von darunterliegenden Lagen der erfindungsgemäßen Brettplatte verhindert oder zumindest verzögert. Durch das auch in Plattenrichtung erfolgende Aufschäumen der silikathaltigen Folien oder Anstriche auf den Brettern der erfindungsgemäßen Brettplatten werden darüber hinaus vorhandene Öffnungen und Durchbrechungen insbesondere in den Decklagen 1, 2 abgedichtet, indem bspw. Fugen zwischen aneinander anliegenden Brettern der Decklagen 1, 2 durch das Aufschäumen des silikathaltigen Materials geschlossen werden. Dies führt zu einer weiteren Verbesserung der Brandhemmung.

## Patentansprüche

1. Mehrlagige Brettplatte mit einer ersten Decklage (1), einer zweiten Decklage (2) und mindestens einer dazwischen angeordneten Mittellage (3), wobei die Decklagen (1, 2) jeweils aus Brettlagen mit einer Mehrzahl von nebeneinander angeordneten Brettern (a, b, c) gebildet sind, wobei wenigstens eine Mittellage (3) aus Holzbrettern (3a, 3b, 3c) gebildet ist, welche zur Bildung der jeweiligen Mittellage (3) so nebeneinander und zueinander angeordnet sind, dass sich materialfreie Zwischenräume (4) zwischen benachbarten Holzbrettern einer Mittellage (3) ergeben, **dadurch gekennzeichnet, dass** die Holzbretter (3a, 3b, 3c) wenigstens einer Mittellage (3) aus Holzschwarten gebildet sind, welche zur Bildung der jeweiligen Mittellage (3) so nebeneinander angeordnet sind, dass sich aufgrund des ungleichmäßigen seitlichen Randbereichs der Holzschwarten Zwischenräume (4) zwischen benachbarten Holzschwarten einer Mittellage (3) ergeben.

2. Brettplatte nach Anspruch 1, **wobei** wenigstens eine Mittellage (3) aus Holzbrettern gebildet ist, welche zur Bildung der jeweiligen Mittellage (3) nebeneinander und im seitlichen Abstand zueinander angeordnet sind, so dass sich aufgrund des seitlichen Abstands der Holzbretter Zwischenräume (4) zwischen benachbarten Holzbrettern einer Mittellage (3) ergeben.

3. Brettplatte nach einem der voranstehenden Ansprüche, **dadurch gekennzeichnet, dass** die Decklagen (1, 2) aus parallelbesäumten Brettern (1a, 1b, 1c; 2a, 2b, 2c) gebildet sind, welche zur Bildung der jeweiligen Decklage (1, 2) ohne Abstand nebeneinander angeordnet sind, um eine zwischenraumfreie Decklage (1, 2) zu bilden.

4. Brettplatte nach einem der voranstehenden Ansprüche, wobei die Faserrichtungen der Bretter (a, b, c) von benachbarten Brettlagen (1,3; 3,2) winklig, insbesondere rechtwinklig zueinander verlaufen.

5. Brettplatte nach einem der voranstehenden Ansprüche, wobei die Faserrichtungen der Bretter (a, b, c) von benachbarten Brettlagen (1,3; 3,2) schrägwinklig zueinander verlaufen, insbesondere unter einem Winkel von 8° bis 45°.

6. Brettplatte nach einem der voranstehenden Ansprüche, **dadurch gekennzeichnet, dass** einzelne Holzbretter (3a, 3b, 3c) einer Mittellage (3) aus durch eine Keilzinkenverbindung miteinander verbundenen Schwartenstücken (3d, 3d') oder Brettstücken gebildet sind.

7. Brettplatte nach Anspruch 6, wobei in den aus Holzschwarten gebildeten Mittellagen (3) im Bereich des Verbindungsstoßes der Schwartenstücke (3d, 3d') Breitensprünge vorliegen.

8. Brettplatte nach Anspruch 1, **dadurch gekennzeichnet, dass** die Holzschwarten (3a, 3b, 3c) einer aus Holzschwarten gebildeten Mittellage (3) in ihrer Längsrichtung im Wesentlichen einen konischen Verlauf aufweisen.

9. Brettplatte nach einem der voranstehenden Ansprüche, **dadurch gekennzeichnet, dass** die Holzbretter (a, b, c) bzw. Holzschwarten von übereinander angeordneten Lagen (1,3; 2,3) miteinander verbunden sind, insbesondere durch Verkleben oder mittels anderer Befestigungsmittel.

10. Brettplatte nach einem der voranstehenden Ansprüche, **dadurch gekennzeichnet, dass** die Zwischenräume (4) einer Mittellage (3) zumindest in ausgewählten Bereichen, insbesondere in Randbereichen der Brettplatte, durch ein Füllmaterial ausgefüllt sind.

11. Brettplatte nach Anspruch 10, **dadurch gekennzeichnet, dass** es sich bei dem Füllmaterial um ein geschäumtes Material, insbesondere einem geschäumten Kunststoff wie Polyurethanschaum oder Polyethylenschaum, Glasschaum oder um ein rieselfähiges Material wie Glasschaumschotter oder um ein wasserglasbasiertes Material handelt.

12. Verfahren zur Herstellung einer mehrlagigen Brettplatte mit einer ersten Decklage (1), einer zweiten Decklage (2) und mindestens einer dazwischen angeordneten Mittellage (3), wobei die Decklagen (1, 2) jeweils aus Brettlagen mit einer Mehrzahl von nebeneinander angeordneten Brettern (a, b, c) gebildet werden, **gekennzeichnet durch** folgende Schritte:
a) Ausbilden der ersten Decklage (1) durch Nebeneinanderlegen von mehreren Brettern (1a, 1b, 1c),
b) Ausbilden einer ersten Mittellage (3) durch Nebeneinanderlegen von mehreren Holzbrettern (3a, 3b, 3c) auf die erste Decklage (1), wobei es sich bei den Holzbrettern (3a, 3b, 3c) um Holzschwarten handelt, welche so nebeneinander angeordnet werden, dass sich aufgrund des ungleichmäßigen seitlichen Randbereichs der Holzschwarten Zwischenräume (4) zwischen benachbarten Holzschwarten ergeben ,
c) Verbinden der Holzbretter (3a, 3b; 3b, 3c) der ersten Mittellage (3) mit den Brettern (1a, 1b, 1c) der ersten Decklage;
d) Ausbilden der zweiten Decklage (2) durch Nebeneinanderlegen von mehreren Brettern (2a, 2b, 2c) auf die Mittellage (3),
e) Verbinden der Bretter (2a, 2b, 2c) der zweiten Decklage (2) mit den Holzbrettern (3a, 3b; 3b, 3c) der darunter liegenden Mittellage (3).

13. Verfahren nach Anspruch 12, **gekennzeichnet durch**
Wiederholen von Schritt b) zur Ausbildung weiterer Mittellagen (3), wobei die Holzbretter (3a, 3b; 3b, 3c) der weiteren Mittellagen (3) so auf die Bretter der darunter liegenden Mittellage (3) aufgelegt werden, dass die Faserrichtungen der Bretter (a, b, c) von benachbarten Brettlagen winklig zueinander verlaufen und mit den Holzbrettern (3a, 3b, 3c) der darunter liegenden Mittellage (3)verbunden werden.

14. Verfahren nach Anspruch 12 oder 13, **dadurch gekennzeichnet, dass** nach dem Fertigstellen der Decklagen (1, 2) und der Mittellage(n) (3) die Zwischenräume (4) der oder jeder Mittellage (3) mit einem Füllmaterial ausgefüllt werden, insbesondere durch Injektion eines flüssigen oder zähflüssigen Füllmaterials.

15. Verfahren nach Anspruch 14, **wobei** für das Injizieren des Füllmaterials Injektionsbohrungen in die Bretter der Decklagen und/oder der Mittellagen (3) eingebracht werden, durch welche das Füllmaterial mittels Injektionsnadeln in die Zwischenräume (4) eingepresst wird.

## Claims

1. Multi-layer board panel with a first cover layer (1), a second cover layer (2) and at least one central layer (3) arranged therebetween, wherein the cover layers (1, 2) are formed respectively from board layers with a plurality of boards (a, b, c) arranged next to one another, wherein at least one central layer (3) is formed from wooden boards (3a, 3b, 3c) which are arranged next to one another and from one another to form the respective central layer (3) so that material-free gaps (4) are produced between adjacent wooden boards of a central layer (3), **characterised in that** the wooden boards (3a, 3b, 3c) of at least one central layer (3) are formed from wooden planks which are arranged next to one another to form the respective central layer (3) so that due to the uneven lateral edge region of the wooden planks, gaps (4) are produced between adjacent wooden planks of a central layer (3).

2. Board panel according to claim 1, wherein at least one central layer (3) is formed from wooden boards which are arranged next to one another and at a lateral distance from one another to form the respective central layer (3) so that due to the lateral distance of the wooden boards, gaps (4) are produced between adjacent wooden boards of a central layer (3).

3. Board panel according to one of the preceding claims, **characterised in that** the cover layers (1, 2) are formed from parallel-trimmed boards (1a, 1b, 1c; 2a, 2b, 2c) which are arranged next to one another without distance to form the respective cover layer (1, 2) in order to form a gap-free cover layer (1, 2).

4. Board panel according to one of the preceding claims, wherein the fibre directions of the boards (a, b, c) of adjacent board layers (1,3; 3,2) run at an angle, in particular at a right-angle to one another.

5. Board panel according to one of the preceding claims, wherein the fibre directions of the boards (a, b, c) of adjacent board layers (1,3; 3,2) run obliquely to one another, in particular at an angle of 8° to 45°.

6. Board panel according to one of the preceding claims, **characterised in that** individual wooden boards (3a, 3b, 3c) of a central layer (3) are formed from plank pieces (3d, 3d') or board pieces joined to one another by a dovetail joint.

7. Board panel according to claim 6, wherein transverse cracks are present in the central layers (3) formed from wooden planks in the region of the scarf joint of the plank pieces (3d, 3d').

8. Board panel according to claim 1, **characterised in that** the wooden planks (3a, 3b, 3c) of a central layer (3) formed from wooden planks have a substantially conical shape in their longitudinal direction.

9. Board panel according to one of the preceding claims, **characterised in that** the wooden boards (a, b, c) or wooden planks of layers (1,3; 2,3) arranged one above another are joined to one another, in particular by adhesion or by means of other attachment means.

10. Board panel according to one of the preceding claims, **characterised in that** the gaps (4) of a central layer (3) are filled by a filler at least in selected regions, in particular in edge regions of the board panel.

11. Board panel according to claim 10, **characterised in that** the filler is a foamed material, in particular a foamed plastic, such as polyurethane foam or polyethylene foam, glass gall or a free-flowing material, such as glass-gall ballast or a waterglass-based material.

12. Method for manufacturing a multi-layer board panel with a first cover layer (1), a second cover layer (2) and at least one central layer (3) arranged therebetween, wherein the cover layers (1, 2) are formed respectively from board layers with a plurality of boards (a, b, c) arranged next to one another, **characterised by** the following steps:
a) forming the first cover layer (1) by placing several boards (1a, 1b, 1c) next to one another,
b) forming a first central layer (3) by placing several wooden boards (3a, 3b, 3c) onto the first cover layer (1) next to one another, wherein the wooden boards (3a, 3b, 3c) are wooden planks which are arranged next to one another so that due to the uneven lateral edge region of the wooden planks, gaps (4) are produced between adjacent wooden planks,
c) connecting the wooden boards (3a, 3b; 3b, 3c) of the first central layer (3) to the boards (1a, 1b, 1c) of the first cover layer;
d) forming the second cover layer (2) by placing several boards (2a, 2b, 2c) onto the central layer (3) next to one another,
e) connecting the boards (2a, 2b, 2c) of the second cover layer (2) to the wooden boards (3a, 3b; 3b, 3c) of the central layer (3) lying underneath.

13. Method according to claim 12, **characterised by** repeating step b) to form further central layers (3), wherein the wooden boards (3a, 3b; 3b, 3c) of the further central layers (3) are placed onto the boards of the central layer (3) lying underneath so that the fibre directions of the boards (a, b, c) of adjacent board layers run at an angle to one another and are joined to the wooden boards (3a, 3b, 3c) of the central layer (3) lying underneath.

14. Method according to claim 12 or 13, **characterised in that** after finishing the cover layers (1, 2) and the central layer(s) (3), the gaps (4) of the or each central layer (3) are filled with a filler, in particular by injection of a liquid or viscous filler.

15. Method according to claim 14, wherein for injection of filler, injection bores are introduced into the boards of the cover layers and/or the central layers (3), through which the filler is pressed into the gaps (4) by means of injection needles.

## Revendications

1. Panneau de lames de bois multicouche avec une première couche de recouvrement (1), une deuxième couche de recouvrement (2) et au moins une couche centrale (3) disposée entre celles-ci, dans lequel les couches de recouvrement (1, 2) sont formées respectivement de couches de lames avec une pluralité de lames (a, b, c) disposées les unes à côté des autres, dans lequel au moins une couche centrale (3) est formée de lames de bois (3a, 3b, 3c), lesquelles, pour la formation de la couche centrale (3) respective, sont disposées les unes à côté des autres et les unes par rapport aux autres, de sorte qu'il en résulte des espaces intermédiaires (4) exempts de matière entre des lames de bois voisines d'une couche centrale (3), **caractérisé en ce que** les lames de bois (3a, 3b, 3c) d'au moins une couche centrale (3) sont formées de dosses, lesquelles, pour la formation de la couche centrale (3) respective, sont disposées les unes à côté des autres de sorte que, en raison de la zone de bord latérale irrégulière des dosses, il en résulte des espaces intermédiaires (4) entre des dosses voisines d'une couche centrale (3).

2. Panneau de lames de bois selon la revendication 1, dans lequel au moins une couche centrale (3) est formée de lames de bois, lesquelles, pour la formation de la couche centrale (3) respective, sont disposées les unes à côté des autres et à une distance latérale, de sorte que, en raison de la distance latérale des lames de bois, il en résulte des espaces intermédiaires (4) entre des lames de bois voisines d'une couche centrale (3).

3. Panneau de lames de bois selon l'une quelconque des revendications précédentes, **caractérisé en ce que** les couches de recouvrement (1, 2) sont formées de lames (1a, 1b, 1c ; 2a, 2b, 2c) délignées parallèlement, lesquelles, pour la formation de la couche de recouvrement (1, 2) respective, sont disposées les unes à côté des autres sans distance, afin de former une couche de recouvrement (1, 2) exempte d'espaces intermédiaires.

4. Panneau de lames de bois selon l'une quelconque des revendications précédentes, dans lequel les directions de fibres des lames (a, b, c) de couches de lames (1,3 ; 3,2) voisines s'étendent angulairement, en particulier perpendiculairement les unes aux autres.

5. Panneau de lames de bois selon l'une quelconque des revendications précédentes, dans lequel les directions de fibres des lames (a, b, c) de couches de lames (1,3 ; 3,2) voisines s'étendent avec un angle en biais les unes par rapport aux autres, en particulier selon un angle de 8° à 45°.

6. Panneau de lames de bois selon l'une quelconque des revendications précédentes, **caractérisé en ce que** des lames de bois (3a, 3b, 3c) individuelles d'une couche centrale (3) sont formées de morceaux de dosses (3d, 3d') ou morceaux de lames reliés les uns aux autres par un assemblage à entures multiples.

7. Panneau de lames de bois selon la revendication 6, dans lequel des fissures en largeur sont présentes dans les couches centrales (3) formées de dosses dans la zone du joint d'assemblage des morceaux de dosses (3d, 3d').

8. Panneau de lames de bois selon la revendication 1, **caractérisé en ce que** les dosses (3a, 3b, 3c) d'une couche centrale (3) formée de dosses présentent dans leur direction longitudinale sensiblement un tracé conique.

9. Panneau de lames de bois selon l'une quelconque des revendications précédentes, **caractérisé en ce que** les lames de bois (a, b, c) ou dosses de couches (1,3 ; 2,3) disposées les unes au-dessus des autres sont reliées les unes aux autres, en particulier par collage ou à l'aide d'autres moyens de fixation.

10. Panneau de lames de bois selon l'une quelconque des revendications précédentes, **caractérisé en ce que** les espaces intermédiaires (4) d'une couche centrale (3) sont remplis au moins dans des zones sélectionnées, en particulier dans des zones de bord du panneau de lames, par un matériau de remplissage.

11. Panneau de lames de bois selon la revendication 10, **caractérisé en ce que** le matériau de remplissage est un matériau expansé, en particulier une matière plastique expansée telle que la mousse de polyuréthane ou mousse de polyéthylène, le verre cellulaire ou un matériau susceptible de s'écouler tel que le granulat de verre cellulaire ou un matériau à base de verre soluble.

12. Procédé pour fabriquer un panneau de lames de bois multicouche avec une première couche de recouvrement (1), une deuxième couche de recouvrement (2) et au moins une couche centrale (3) disposée entre celles-ci, dans lequel les couches de recouvrement (1, 2) sont formées respectivement de couches de lames avec une pluralité de lames (a, b, c) disposées les unes à côté des autres, **caractérisé par** les étapes suivantes :
a) la réalisation de la première couche de recouvrement (1) par pose de plusieurs lames (1a, 1b, 1c) les unes à côté des autres,
b) la réalisation d'une première couche centrale (3) par pose de plusieurs lames de bois (3a, 3b, 3c) les unes à côté des autres sur la première couche de recouvrement (1), dans lequel les lames de bois (3a, 3b, 3c) sont des dosses, lesquelles sont disposées les unes à côté des autres de sorte que, en raison de la zone de bord latérale irrégulière des dosses, il en résulte des espaces intermédiaires (4) entre des dosses voisines,
c) l'assemblage des lames de bois (3a, 3b ; 3b, 3c) de la première couche centrale (3) aux lames (1a, 1b, 1c) de la première couche de recouvrement ;
d) la réalisation de la deuxième couche de recouvrement (2) par pose de plusieurs lames (2a, 2b, 2c) les unes à côté des autres sur la couche centrale (3),
e) l'assemblage des lames (2a, 2b, 2c) de la deuxième couche de recouvrement (2) aux lames de bois (3a, 3b ; 3b, 3c) de la couche centrale (3) située dessous.

13. Procédé selon la revendication 12, **caractérisé par**
la répétition de l'étape b) pour la réalisation d'autres couches centrales (3), dans lequel les lames de bois (3a, 3b ; 3b, 3c) des autres couches centrales (3) sont posées sur les lames de la couche centrale (3) située dessous, de sorte que les directions de fibres des lames (a, b, c) de couches de lames voisines s'étendent angulairement les unes par rapport aux autres et sont assemblées aux lames de bois (3a, 3b, 3c) de la couche centrale (3) située dessous.

14. Procédé selon la revendication 12 ou 13, **caractérisé en ce que**, après l'achèvement des couches de recouvrement (1, 2) et de la ou des couches centrales (3), les espaces intermédiaires (4) de la ou chaque couche centrale (3) sont remplis d'un matériau de remplissage, en particulier par injection d'un matériau de remplissage liquide ou semi-liquide.

15. Procédé selon la revendication 14, dans lequel, pour l'injection du matériau de remplissage, des trous d'injection sont pratiqués dans les lames des couches de recouvrement et/ou des couches centrales (3), par lesquels le matériau de remplissage peut être inséré dans les espaces intermédiaires (4) au moyen d'aiguilles d'injection.
